# EUROPÄISCHE PATENTSCHRIFT

(11) **EP 0 821 639 B1**
(45) Veröffentlichungstag und Bekanntmachung des Hinweises auf die Patenterteilung: **28.07.1999**
(21) Anmeldenummer: 96912026.0
(22) Anmeldetag: 20.04.1996
(51) Int. Cl.: B27N 3/00

(54) **VERFAHREN ZUR HERSTELLUNG VON FORMKÖRPERN**
METHOD OF PRODUCING MOULDINGS
PROCEDE DE PRODUCTION DE CORPS MOULES

(30) Priorität: 21.04.1995 DE 19514789
(43) Veröffentlichungstag der Anmeldung: 04.02.1998
(73) Patentinhaber: EXORI - Import - Export Gesellschaft mit beschränkter Haftung & Co. KG, 22884 Weyhe-Dreye (DE)
(72) Erfinder: OVERSBERG, Hans-Hermann, D-41236 Mönchengladbach (DE)
(74) Vertreter: Stenger, Watzke & Ring Patentanwälte
(86) Internationale Anmeldenummer: EP9601664
(87) Internationale Veröffentlichungsnummer: WO9633057

(56) Entgegenhaltungen:
- WO-A-92/04169
- DE-A- 4 221 070
- DE-A- 4 316 901
- DE-A- 4 320 255
- DE-A- 4 342 678
- US-A- 3 973 922
- PATENT ABSTRACTS OF JAPAN vol. 6, no. 142 (M-146), 31.Juli 1982 & JP,A,57 062837 (TAKAGI MASARU), 16.April 1982,

## Beschreibung

Die Erfindung betrifft ein Verfahren zur Herstellung von Formkörpern als Gewichte für Fischereizwecke.

Die Erfindung wird in Anspruch 1 angegeben.

Das Verfahren verwendet zerkleinerte Rohstoffe, zum Beispiel in Form von Granulaten, Pulvern, Spänen oder Stäuben. Diese können verschiedene Korngrößen aufweisen und sowohl körnig als auch faserig sein. Vorteilhafterweise können als Rohstoffe Reststoffe verwendet werden. Da das Zerkleinern von Materialien aller Art mit zu den energieintensivsten verfahrenstechnischen Prozessen zählt, sollten die zu verwendenden Reststoffe vorteilhafterweise bereits zerkleinert sein. Dazu eignen sich zum Beispiel Metallpulver aus Entstaubungen oder beispielsweise in der Automobilindustrie anfallende Schleif- und Bohr-Reststoffe.

Die zerkleinerten Rohstoffe werden miteinander vermischt. Dabei werden die Stoffe so vereinigt, daß im beliebig herausgegriffenen Teilvolumen eine möglichst gleichmäßige Zusammensetzung der einzelnen Rohstoff-Komponenten vorliegt. Vorteilhafterweise werden die zerkleinerten Rohstoffe trocken in einem Gefäß vermischt. Das trockene Vermischen der zerkleinerten Rohstoffe hat den Vorteil, daß vorab keine unbeabsichtigten Reaktionen, beispielsweise zwischen den verschiedenen zerkleinerten Rohstoffen oder weiteren, beispielsweise weitestgehend flüssigen Mischprodukten, wie zum Beispiel Wasser, auftreten.

Anschließend wird zur Aufbereitung der vermischten zerkleinerten Rohstoffe Wasserglas als Bindemittel verwendet. Die Aufbereitung der vermischten zerkleinerten Rohstoffe mit dem Bindemittel erfolgt in einem weiteren Mischvorgang, zum Beispiel mit einem herkömmlichen Sandmischer. Wasserglas wird gemäß einem Vorschlag der Erfindung in einem Anteil von bis zu 20 % Wasserglas verwendet.

In einer Ausführungsart der vorliegenden Erfindung kommt es bei der Aufbereitung zu einer exothermen Reaktion, aus der gleichzeitig ein Trocknungseffekt resultiert. Der Rohstoff erhitzt sich dabei beispielsweise derart, daß flüssige Bestandteile, zum Beispiel Wasser, ausdiffundieren können und der Rohstoff so trocknet.

In einem Verfahrensschritt werden die mit Bindemittel aufbereiteten, vermischten, zerkleinerten Rohstoffe in Formen gepreßt. Vorteilhafterweise werden dazu Dauerformen verwendet, so daß eine größere Anzahl von gleichen Formkörpern mit ein und derselben Form herstellbar sind. Durch das Pressen wird der Zusammenhalt der vermischten Stoffe geschaffen. Gemäß einer Ausführungsart der Erfindung wird zum Pressen Druckluft verwendet. Ähnlich der Pulvermetallurgie werden dazu vorteilhafterweise Druck- oder Preßformen verwendet. Gemäß einer weiteren Ausführungsart der Erfindung werden in den Dauerformen Einlegeteile verwendet. Dadurch wird gezielt die Stabilität der herzustellenden Formkörper vergrößert. Vorteilhafterweise können zum Pressen der mit Bindemittel aufbereiteten, vermischten, zerkleinerten Rohstoffe in die entsprechenden Formen herkömmliche Kernschieß- bzw. Kernformmaschinen verwendet werden.

In einem weiteren Verfahrensschritt wird das in Formen gepreßte Gemisch aus mit Wasserglas, aufbereiteten, vermischten, zerkleinerten Rohstoffen ausgehärtet. Gemäß der Erfindung erfolgt das Aushärten durch Begasen. Dabei wird das in Formen gepreßte Gemisch aus beispielsweise mit Wasserglas aufbereiteten, vermischten, zerkleinerten Rohstoffen, insbesondere zerkleinerten Metallen, mit einem Gas in Kontakt gebracht. Dabei verfestigt sich das Gemisch und härtet aus. Zum Begasen wird CO₂-Gas verwendet. Durch das CO₂-Gas wird das in dem Gemisch vorhandene Wasserglas, zersetzt. Das zersetzte Bindemittel verbindet sich mit den vermischten, zerkleinerten Rohstoffen und verfestigt sich anschließend wieder.

In einem weiteren Verfahrensschritt kann der feste Formkörper einer Wärmebehandlung unterzogen und so nachgehärtet werden. Durch die Wärmebehandlung lassen sich bei gegebener Zusammensetzung das Gefüge und damit die gewünschten Eigenschaften des Formkörpers bzw. dessen Materials einstellen, beispielsweise die Härte oder die Zähigkeit. Vorteilhafterweise erfolgt das Nachhärten der Formkörper durch eine Glühbehandlung. Dabei wird der Formkörper auf bestimmte Temperaturen erwärmt, bis eine gleichmäßige Temperatur. Anschließend wird der Formkörper abgekühlt und so nachgehärtet. Diese Vorgänge erlauben die gezielte Einstellung von Gefügen und damit eine gezielte Beeinflussung von technologischen Eigenschaften der Formkörper, beispielsweise Oberflächenbeschaffenheit, Härte oder Haltbarkeit. Vorteilhafterweise erfolgt die Glühbehandlung etwa bei 200°C. Dadurch ist ein Aufschmelzen der verschiedenen zerkleinerten Rohstoffe, insbesondere bei Metallen, nicht gegeben.

In einem abschließenden Verfahrensschritt kann der Formkörper mit Kunststoff umhüllt werden. Dadurch wird sichergestellt, daß eventuell schädliche Stoffe, die in den vermischten, zerkleinerten Rohstoffen enthalten sein können, aus dem Formkörper ausdringen bzw. daß diese nicht durch Kontakte oder chemische Reaktionen in die Umwelt gelangen. Darüber hinaus stellt das Umhüllen der Formkörper mit Kunststoff eine weitere Oberflächenbehandlung bzw. -veredelung dar.

Die gemäß dem Verfahren hergestellten Formkörper zu Fischereizwecken (Bleiersatzstoff) weisen eine Dichte von 5 g/cm³ bis 6 g/cm³ auf.

Besonders vorteilhaft ist, daß das Verfahren gemäß der vorliegenden Erfindung die Verwendung von metallischen Reststoffen, ermöglicht, den Einsatz von herkömmlichen Produktionsmaschinen gestattet, beispielsweise herkömmliche Sandmischer oder Kernformmaschinen, und durch eine gezielte und aufeinander abgestimmte Auswahl von Rohstoffen und Verfahrensschritten eine energie- und kostenreduzierte Herstellung verschiedenster Formkörper mit gezielt einstellbaren technologischen Eigenschaften bereitstellt.

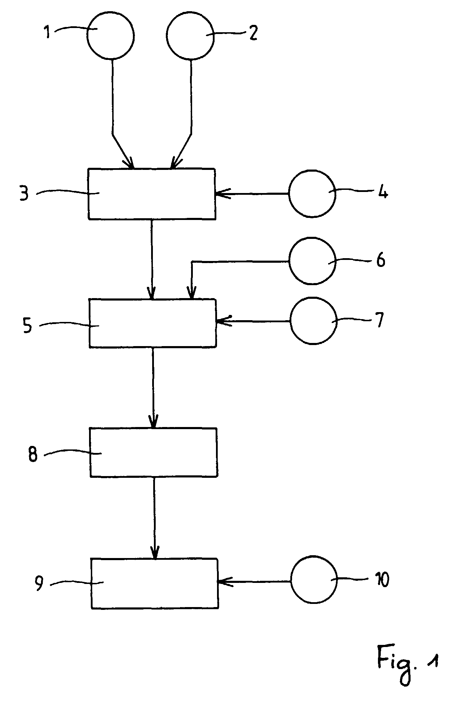

In der beiliegenden Figur ist symbolartig das erfindungsgemäße Verfahren dargestellt. In einem ersten Verfahrensschritt werden im gezeigten Ausführungsbeispiel zerkleinerte Rohstoffe 1, 2, zum Beispiel ein Eisenpulver 1 und ein Aluminiumpulver 2 trocken miteinander vermischt, zum Beispiel in einem herkömmlichen Sandmischer 3. In einem zweiten Verfahrensschritt werden die vermischten zerkleinerten Rohstoffe 1, 2 mit mindestens einem Bindemittel 4, Wasserglas aufbereitet. Dazu wird im gezeigten Ausführungsbeispiel das Wasserglas 4 ebenfalls dem Sandmischer 3 zugeführt und mit dem Eisenpulver 1 und dem Aluminiumpulver 2 vermischt. Im dritten Verfahrensschritt wird das Gemisch aus Eisenpulver 1, Aluminiumpulver 2 und Wasserglas 4 mit Druckluft in eine Form 5 gepreßt, beispielsweise mit einer Kernformmaschine. Zusätzlich können in die Form 5 Einlegeteile 6 eingebracht werden, die beispielsweise die Stabilität des Formkörpers vergrößern. Im nächsten Verfahrensschritt wird das Gemisch aus Eisenpulver 1, Aluminiumpulver 2 und Wasserglas 4 mit Gas 7, CO₂, begast und dadurch ausgehärtet. In einem weiteren Verfahrensschritt wird der Formkörper zum Nachhärten einer Wärmebehandlung unterzogen. Dazu wird dieser in einen Ofen 8 gebracht und etwa bei 200°C nachgehärtet. Dabei soll nicht erreicht werden, daß die Metallpulver 1 und 2 aufschmelzen (sintern). In einem letzten Verfahrensschritt wird der so hergestellte Formkörper beispielsweise in einem Tauchbad 9 mit Kunststoff 10 umhüllt.

### Bezugszeichenliste

- 1: Rohstoff
- 2: Rohstoff
- 3: Sandmischer
- 4: Bindemittel
- 5: Form
- 6: Einlegeteile
- 7: Gas
- 8: Ofen
- 9: Tauchbad
- 10: Kunststoff

## Patentansprüche

1. Verfahren zur Herstellung von Formkörpern als Gewichte für Fischereizwecke,
**dadurch gekennzeichnet,**
daß zerkleinerte Nicht-Blei-Metalle (1, 2) unterschiedlicher Korngröße mit Wasserglas (4) als Bindemittel in solchen Anteilen vermischt werden, daß der fertige Formkörper ein spezifisches Gewicht von 5-6 g/cm³ besitzt, das Gemisch in eine Form gepreßt und durch Begasen mit Kohlendioxid ausgehärtet wird.

2. Verfahren nach Anspruch 1, dadurch gekennzeichnet, daß die Rohstoffe (1, 2) trocken vermischt werden.

3. Verfahren nach einem der vorhergehenden Ansprüche, dadurch gekennzeichnet, daß als Rohstoffe (1, 2) Reststoffe verwendet werden.

4. Verfahren nach einem der vorhergehenden Ansprüche, dadurch gekennzeichnet, daß als Formen (5) Dauerformen verwendet werden.

5. Verfahren nach einem der vorhergehenden Ansprüche, dadurch gekennzeichnet, daß zum Pressen Druckluft verwendet wird.

6. Verfahren nach einem der vorhergehenden Ansprüche, dadurch gekennzeichnet, daß in den Formen (5) Einlegeteile (6) verwendet werden.

7. Verfahren nach einem der Ansprüche 1 bis 6, dadurch gekennzeichnet, daß die Formkörper nachgehärtet werden.

8. Verfahren nach Anspruch 7, dadurch gekennzeichnet, daß das Nachhärten durch eine Glühbehandlung erfolgt.

9. Verfahren nach einem der Ansprüche 1 bis 8, dadurch gekennzeichnet, daß die Formkörper mit Kunststoff umhüllt werden.

10. Verfahren nach einem der Ansprüche 1 bis 9, dadurch gekennzeichnet, daß bis zu 20 Gew.-% Wasserglas verwendet wird.

11. Verfahren nach einem der Ansprüche 1 bis 10, dadurch gekennzeichnet, daß eine Kernform- oder Kernschießmaschine verwendet wird.

12. Verfahren nach einem der vorhergehenden Ansprüche, dadurch gekennzeichnet, daß durch die Aufbereitung eine exotherme Reaktion hervorgerufen wird.

## Claims

1. Method for producing shaped parts as weights used in fishing, characterized in that comminuted metals (1, 2), which are not lead, of different grain sizes are mixed with water glass (4) as the binder in proportions which are such that the finished shaped part has a relative density of 5-6 g/cm³, the mixture is pressed into a mould and is hardened by gasification with carbon dioxide.

2. Method according to Claim 1, characterized in that the raw materials (1, 2) are mixed in the dry state.

3. Method according to one of the preceding claims, characterized in that remainder materials are used as the raw materials (1, 2).

4. Method according to one of the preceding claims, characterized in that permanent moulds are used as moulds (5).

5. Method according to one of the preceding claims, characterized in that compressed air is used for the pressing operation.

6. Method according to one of the preceding claims, characterized in that inserts (6) are used in the moulds (5).

7. Method according to one of Claims 1 to 6, characterized in that the shaped parts are post-hardened.

8. Method according to Claim 7, characterized in that the post-hardening is carried out by means of an annealing treatment.

9. Method according to one of Claims 1 to 8, characterized in that the shaped parts are coated with plastic.

10. Method according to one of Claims 1 to 9, characterized in that up to 20% by weight of water glass is used.

11. Method according to one of Claims 1 to 10, characterized in that a core-moulding or core-shooting machine is used.

12. Method according to one of the preceding claims, characterized in that an exothermic reaction is brought about by the preparation.

## Revendications

1. Procédé de fabrication de corps moulés comme poids pour la pêche,
caractérisé par le fait
que des métaux exempts de plomb (1, 2) concassés de granulométrie variable sont mélangés avec du silicate de sodium (4) comme liant dans des proportions telles que le moulage fini possède un poids spécifique de 5-6 g/cm³, le mélange étant comprimé dans un moule et durci par gazage au gaz carbonique.

2. Procédé conformément à la revendication 1, caractérisé par le fait que les matières premières (1, 2) peuvent être mélangées à sec.

3. Procédé conformément à l'une des revendications précédentes, caractérisé par le fait que des résidus sont utilisés comme matières premières (1, 2) .

4. Procédé conformément à l'une des revendications précédentes, caractérisé par le fait que des moules permanents sont utilisés comme moules (5).

5. Procédé conformément à l'une des revendications précédentes, caractérisé par le fait que de l'air comprimé est utilisé pour la compression.

6. Procédé conformément à l'une des revendications précédentes, caractérisé par le fait que des pièces d'incrustation (6) sont utilisées dans les moules (5).

7. Procédé conformément à la revendication 1 à 6, caractérisé par le fait que les moulages sont recuits.

8. Procédé conformément à la revendication 7, caractérisé par le fait que la recuisson a lieu par traitement de recuit.

9. Procédé conformément à la revendication 1 à 8, caractérisé par le fait que les moulages sont enveloppés de matière plastique.

10. Procédé conformément à l'une des revendications 1 à 9, caractérisé par le fait qu'on utilise jusqu'à 20% du poids du silicate de sodium.

11. Procédé conformément à l'une des revendications 1 à 10, caractérisé par le fait qu'on utilise un appareil mouleur noyauteur ou dénoyauteur.

12. Procédé conformément à l'une des revendications précédentes, caractérisé par le fait qu'une réaction exothermique est provoquée par la préparation.
